# EUROPÄISCHE PATENTSCHRIFT

(11) **EP 0 567 750 B1**
(45) Veröffentlichungstag und Bekanntmachung des Hinweises auf die Patenterteilung: **06.11.1996**
(21) Anmeldenummer: 93104111.5
(22) Anmeldetag: 13.03.1993
(51) Int. Cl.: A01B 33/08, F16D 1/08, F16D 1/06

(54) **Bodenbearbeitungsmaschine, insbesondere Kreiselegge**
Soil working machine, particularly a rotary harrow
Machine pour le travail du sol, en particulier herse rotative

(30) Priorität: 29.04.1992 DE 9205772 U; 10.06.1992 DE 9207783 U; 13.11.1992 DE 9215461 U
(43) Veröffentlichungstag der Anmeldung: 03.11.1993
(60) Teilanmeldung: 96101717.5
(73) Patentinhaber: Rabewerk GmbH + Co., 49152 Bad Essen (DE)
(72) Erfinder: Warnking, Richard, Dipl.-Ing., W-4515 Bad Essen (DE)
(74) Vertreter: Missling, Arne, Dipl.-Ing.

(56) Entgegenhaltungen:
- EP-A- 0 007 896
- EP-A- 0 307 505
- DE-A- 2 624 523
- DE-A- 3 121 694
- DE-U- 9 114 236
- FR-A- 2 295 689
- FR-A- 2 512 627

## Beschreibung

Die Erfindung bezieht sich auf eine Bodenbearbeitungsmaschine, insbesondere eine Kreiselegge, mit mehreren Werkzeugkreiseln, welche jeweils eine in Arbeitsstellung im wesentlichen vertikal ausgerichtete Welle umfassen, welche mit einem Zahnrad gekoppelt ist, an ihrem unteren Ende mit einem Werkzeugträger verbunden ist und an einem gemeinsamen Gehäuse gelagert ist.

Kreiseleggen sind in vielfältigsten Ausführungsvarianten bekannt. Bei Kreiseleggen ist es stets erforderlich, die einzelnen Wellen, an deren unteren Enden die Werkzeuge befestigt sind, in ausreichend stabiler Weise an einem Kastenbalken zu lagern. In dem Kastenbalken befinden sich die einzelnen Zahnräder, welche zum Antrieb der Wellen erforderlich sind. Der Kastenbalken muß eine ausreichende Stabilität aufweisen, um Verformungen während des Betriebes zu vermeiden, welche wiederum zu Beschädigungen der Zahnräder und/oder der Lagerungen der Wellen führen würden. Weiterhin ist es erforderlich, im Innenraum des Kastenbalkens ein Schmiermittel, beispielsweise Öl, zur Schmierung der Lager und der Zahnräder einzubringen, so daß auch entsprechende Abdichtmaßnahmen erforderlich sind. Weiterhin ergibt sich die Notwendigkeit, bei Beschädigung einzelner Werkzeugkreisel diese einfach und schnell und reparieren zu können.

Die üblichen, aus dem Stand der Technik bekannten Ausgestaltungsformen von Kastenprofilen sehen einen trogartigen Unterteil vor, auf welchen ein Deckel aufgeschraubt ist. Nachteilig hierbei ist, daß, abgesehen von der verminderten Stabilität, eine vielzahl von Schrauben zur Befestigung des Deckels erforderlich sind und daß erhebliche Aufwendungen zur Abdichtung getroffen werden müssen.

Es ist eine Kreiselegge bekannt, bei welcher der Kastenbalken in Form eines einen im wesentlichen rechteckigen Querschnitt aufweisenden geschlossenen Hohlprofiles ausgebildet ist. Dieses ist durch seitliche Deckel verschlossen und weist untere und obere Öffnungen auf, durch welche die Lagerungen der Werkzeugkreisel eingesteckt und die Zahnräder befestigt werden können. Bei der Montage werden die Zahnräder seitlich in das Hohlprofil eingeschoben, anschließend wird von unten die Welle durchgesteckt und mittels einer Nut-Feder-Verbindung drehfest mit den Zahnrädern gekoppelt. Nachfolgend werden die Zahnräder von oben, durch die oberen Öffnungen des Kastenprofiles mit den Wellen verschraubt. Es erweist sich als besonders nachteilig, daß eine vielzahl von Öffnungen in dem Kastenprofil vorgesehen werden müssen, welche zu einer erheblichen Schwächung der Stabilität und Festigkeit führen. Weiterhin ist der Montageaufwand sehr hoch. Ein weiterer Nachteil besteht in der Verwendung von Keilwellenprofilen, diese führen bei Kreiseleggen durch den Betrieb zu Lockerungen, wodurch Beschädigungen insbesondere der Zahnräder, Lager und der Wellen sowie der gesamten Werkzeugkreisel auftreten.

Die DE-OS 26 24 523 zeigt, ebenso wie die IT-PS 69 90 34, eine Ausgestaltung des Kastenbalkens, bei welcher dieser aus mehreren einzelnen Gehäuseabschnitten zusammengesetzt ist. Diese sind zwar jeweils in Form eines geschlossenen Hohlprofiles ausgebildet, es ergeben sich jedoch erhebliche Probleme hinsichtlich der Gesamtstabilität, da sehr aufwendige Maßnahmen zur Verbindung der einzelnen Gehäuseabschnitte erforderlich sind. Weiterhin sind die Wellen der Werkzeugkreisel in üblicher Weise, wie vorstehend genannt, mit den Zahnrädern verbunden, so daß sich auch hier Nachteile hinsichtlich der Montage und durch beim Betrieb auftretende Lockerungen ergeben. Zusätzlich weisen die einzelnen Gehäuseabschnitte sowohl obere als auch untere Öffnungen auf, so daß auch hier hinsichtlich der Abdichtung ein hoher Aufwand und erhebliche Probleme bestehen.

Die GB-PS 1,169,371 zeigt ein geschlossenes Hohlprofil des Kastenbalkens, dieses weist jedoch sehr große untere Ausnehmungen auf, durch welche die Zahnräder eingeführt werden müssen. Somit ergeben sich sowohl hinsichtlich der Festigkeit als auch hinsichtlich der Montage vielfältigste Probleme.

Aus der EP-A1-449 362 ist eine trogförmige Ausgestaltung eines Kastenbalkens vorbekannt, bei welcher, wie bereits erläutert, ein oberer Deckel vorhanden ist. Zusätzlich weist die untere Wandung des Trog-Profiles sehr große Ausnehmungen auf, durch welche eine Demontage der Lagergehäuse und/oder der Zahnräder möglich ist. Diese Ausgestaltungsform ist besonders nachteilig, da zusätzlich zu den Problemen, welche sich durch den aufgeschraubten Deckel ergeben, sehr große Ausnehmungen im unteren Bereich des Gehäuses vorhanden sind. All dies führt zu einer Schwächung der Festigkeit der gesamten Anordnung sowie zu erheblichen Dichtungsproblemen.

Der Erfindung liegt die Aufgabe zugrunde, eine Bodenbearbeitungsmaschine der eingangs genannten Art zu schaffen, welche bei einfachem Aufbau und einfacher, kostengünstiger Herstellbarkeit ein hohes Maß an Stabilität und Festigkeit aufweist, bei welcher Beschädigungen der Bauelemente durch den Betrieb weitgehend vermieden werden und welche sich durch ein hohes Maß an Servicefreundlichkeit auszeichnet.

Erfindungsgemäß wird die Aufgabe dadurch gelöst, daß die Welle und das Zahnrad durch eine form- und/oder reibschlüssige, durch axiale, die Welle von unten durchgreifende Spanneinrichtung hergestellte Verbindung gekoppelt sind, wobei die Verspannung die Zentrierung der Welle zu dem Zahnrad bewirkt. Dabei ist es besonders vorteilhaft, wenn die Verbindung aus Verbindungselementen zusammengesetzt ist, die an einem Ende der Welle und einer Nabe des Zahnrades vorgesehen sind, entweder an den benachbarten, einander zugekehrten und/oder aneinander anliegenden Stirnseiten der Welle und der Nabe und/oder an den an die Stirnseiten anschließenden Mantelbereichen.

Die erfindungsgemäße Bodenbearbeitungsmaschine zeichnet sich durch eine Reihe erheblicher Vorteile aus. Durch die Verwendung eines geschlossenen Hohlprofiles, welches bevorzugterweise einen im wesentlichen rechteckigen Querschnitt aufweist, kann zunächst der gesamte Kastenbalken mit höchster Stabilität ausgeführt werden; es sind somit während des Betriebes nur geringste Verwindungen oder Verformungen zu befürchten, so daß Beschädigungen der Zahnräder (Stirnräder) sowie der Lagerungen der Welle vermieden werden. Durch die stirnseitige Verbindung zwischen der Welle und dem Zahnrad ergeben sich nun aber zusätzlich zwei wesentliche Vorteile. Der eine Vorteil liegt in der einfachen Montage, da die Welle lediglich gegen das Zahnrad gelegt zu werden braucht, um eine ausreichende Kraftübertragung sicherzustellen. Der andere Vorteil ergibt sich aus der Verbindung selbst. Diese führt nicht zu Lockerungen während des Betriebes, so daß auch unter härtesten Einsatzbedingungen keine Beschädigungen oder kein Verschleiß auftreten können. Weiterhin ist die Montage zur Herstellung der Bodenbearbeitungsmaschine besonders einfach, da keine Montagearbeiten von der Oberseite des Kastenbalkens aus durchgeführt werden müssen. Dieser braucht somit an seiner Oberseite keine Ausnehmungen aufzuweisen, so daß die Gesamtstabilität erheblich erhöht wird. Weiterhin entfallen die aus dem Stand der Technik bekannten Dichtungsprobleme, welche sich bei oberen Abschlußdeckeln ergeben würden.

Weiterhin ist es auf besonders einfache Weise möglich, die Welle und die damit zusammenhängende Lagerung im Reparaturfall zu demontieren. Es kann nämlich sowohl die Welle als auch das Lagergehäuse als eine Baugruppe nach unten entnommen werden, ohne daß das Zahnrad ausgebaut werden muß. Es ist somit möglich, die Lagerung und den Werkzeugträger der einzelnen Kreisel separat zu demontieren, beispielsweise um diesen auszutauschen oder zu überprüfen, ohne sonstige Teile der Kreiselegge, wie z.B. den Anbaubock, lösen oder demontieren zu müssen.

Die Ausführung kann zunächst so getroffen sein, daß unter Verwendung eines reinen Reibschlusses eine spannbare, glatt-kegelige Verbindung mit einem Außenkegel an einem Ende der Welle und einem korrespondierenden Innenkegel an der Nabe vorgesehen ist. Es ist besonders vorteilhaft, wenn als Verbindungselemente an einem Ende der Welle ein Keilwellen-Außenprofil und an der Nabe ein komplementäres Keilwellen-Innenprofil vorgesehen sind, wobei der durch den kleinen Durchmesser des Keilwellenprofils bestimmte Fuß des Keilwellen-Außenprofils und der komplementäre Kopf des Keilwellen-Innenprofils durch Segmente einer jeweiligen Kegelfläche gebildet werden, die nach dem Spannen der Verbindung aneinanderliegen.

Die formschlüssige Verbindung zwischen dem Zahnrad und der Welle kann auch in Form einer Hirth-Verzahnung oder einer sonstigen planen Kerbverzahnung ausgebildet sein.

Die Welle und das Zahnrad sind bevorzugterweise mittels einer axialen, von der dem Zahnrad abgewandten Seite der Welle betätigbaren Spanneinrichtung verbunden, welche bevorzugterweise in Form einer Schraube ausgebildet ist, die entweder in ein Gewinde in der Nabe des Zahnrades oder in ein das Zahnrad auf die Welle spannendes Mutternelement eingeschraubt ist. Es ist zweckmäßig, wenn das Mutternelement an dem Zahnrad befestigt, beispielsweise eingepreßt ist und/oder mit einem Bund koaxial in eine passende Ausnehmung der Welle faßt, vorteilhafterweise so, daß das Zahnrad gegenüber der Welle zentriert ist. In jedem Falle ist gewährleistet, daß das Spannelement von unten zugänglich ist, so daß die Montage oder Demontage von der Unterseite des Kastenbalkens aus erfolgen kann.

Die Ausnehmung in der unteren Wandung des Hohlprofiles ist bevorzugterweise so bemessen, daß außer der Welle ein Zentrierbereich des Lagergehäuses durchführbar ist. Daraus ergibt sich, daß diese Ausnehmung ausgesprochen klein dimensioniert sein kann, so daß die Gesamtfestigkeit des Hohlprofiles nicht beeinträchtigt wird. Das übliche Lagergehäuse kann an die Unterseite des Hohlprofiles angeschraubt werden, so daß bezüglich der weiteren Dimensionierung des Lagergehäuses keine Beschränkungen bestehen.

Zum Verschrauben des Lagergehäuses oder weiterer Bauelemente kann es günstig sein, Verstärkungselemente in den Innenraum des Hohlprofiles einzubringen, beispielweise durch Einschieben durch die seitlichen Öffnungen. Diese Verstärkungselemente können beispielsweise in Form einer Platte ausgebildet sein, gegen welche die unteren Lagergehäuse verschraubt sind. Die Platte kann auch als Montagehilfe dienen, wobei ein Teil der Nabe des Zahnrades in die zwangsläufig vorhandenen Öffnungen der Platte eingelegt werden kann. Somit können die Zahnräder nicht verrutschen und es ist möglich, die gesamte Anordnung (Platte und Zahnräder) seitlich in das Hohlprofil einzuschieben.

Die Anschlußelemente, beispielsweise zum Befestigen eines Anbaubockes können in unterschiedlicher Weise an dem Hohlprofil befestigt sein, beispielsweise durch das Hohlprofil umgreifende Schraubbänder oder Verschweißen. Die sonst üblichen Endplatten an den Enden des Gehäuses, an denen Tragarme für Abstützwalzen und anderes gelagert sein können, können die Öffnungen enthalten, die zur Montage der Zahnräder erforderlich sind. Diese Öffnungen werden mit Platten bzw. Deckeln verschlossen. Auch diese Platten können die Anschlußteile zur Anbringung, beispielsweise der Walzen, aufweisen.

Im folgenden wird die Erfindung anhand von Ausführungsbeispielen in Verbindung mit der Zeichnung beschrieben. Dabei zeigt:
- Fig. 1: eine vereinfachte Schnittansicht A-A aus Fig. 5 eines ersten Ausführungsbeispieles,
- Fig. 2: eine Teil-Draufsicht auf eine Ausführungsform sowohl eines Anschlußelementes als auch von Verstärkungselementen zur Befestigung eines Antriebs-Tellerrades und dessen Lagerung,
- Fig. 3: eine Teil-Draufsicht, ähnlich Fig. 2, einer abgewandelten Ausführungsform,
- Fig. 4: eine Schnittansicht ähnlich Fig. 1 eines zweiten Ausführungsbeispieles,
- Fig. 5: die stirnseitige Ansicht einer erfindungsgemäßen Bodenbearbeitungsmaschine,
- Fig. 6: eine Schnittansicht B-B aus Fig. 5 ähnlich Fig. 1, mit einem Eingangsgetriebe,
- Fig. 7: eine endseitige Ansicht C aus Fig. 5 auf den Deckelbereich des Hohlprofiles,
- Fig. 8: eine Seitenansicht der in Fig. 7 gezeigten Anordnung,
- Fig. 9: eine Schnittansicht ähnlich den Fig. 1 und 4, eines dritten Ausführungsbeispieles, bei welchem zusätzlich eine obere Lagerung Verwendung findet.
- Fig. 10: eine Schnittansicht eines weiteren Ausführungsbeispieles ähnlich den Fig. 1, 4 und 9,
- Fig. 11 und Fig. 11a: je eine Schnittansicht eines weiteren Ausführungsbeispieles ähnlich den Fig. 1, 4, 9 und 10, und
- Fig. 12: die Einzelheiten einer erfindungsgemäßen Verbindung aus Fig. 11 in drei Teilansichten.

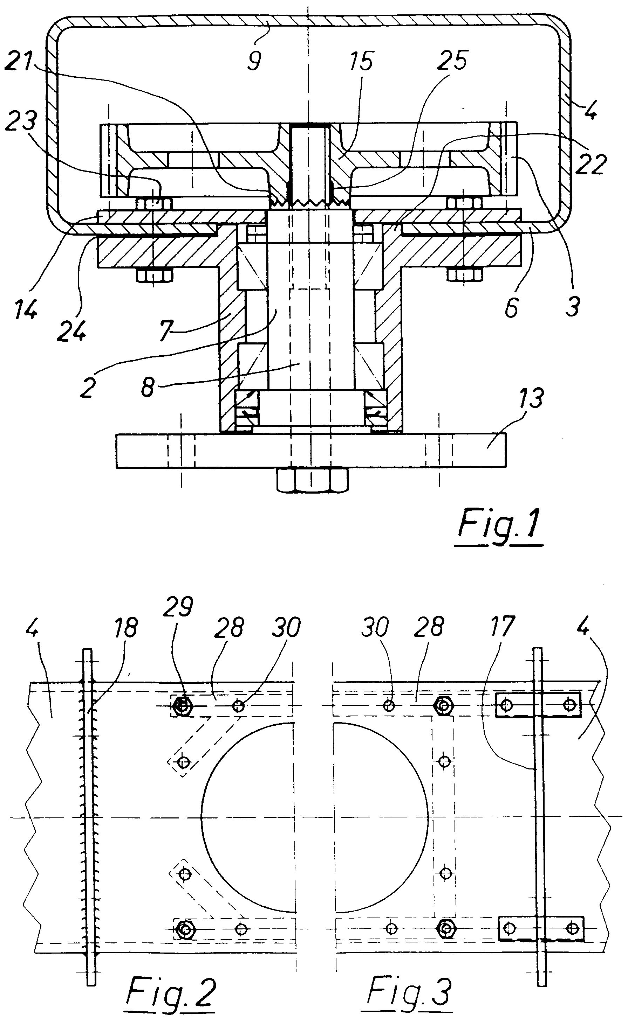

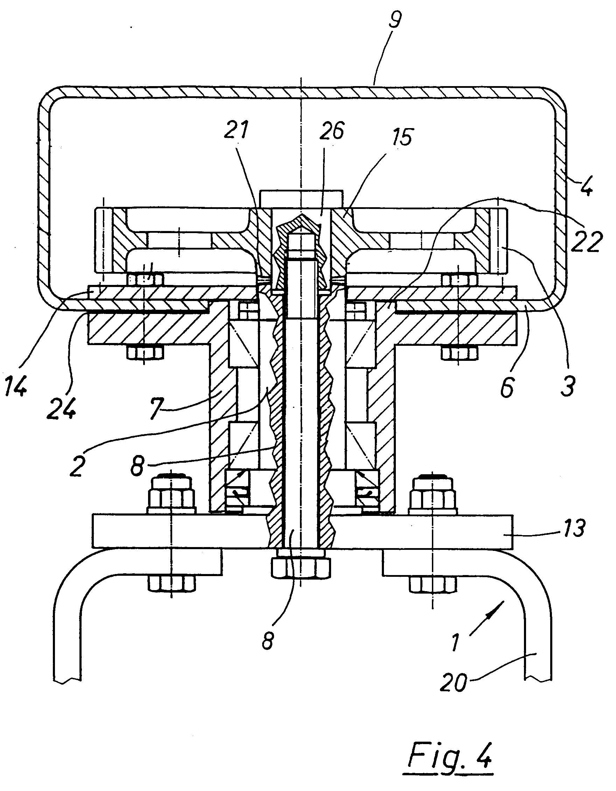

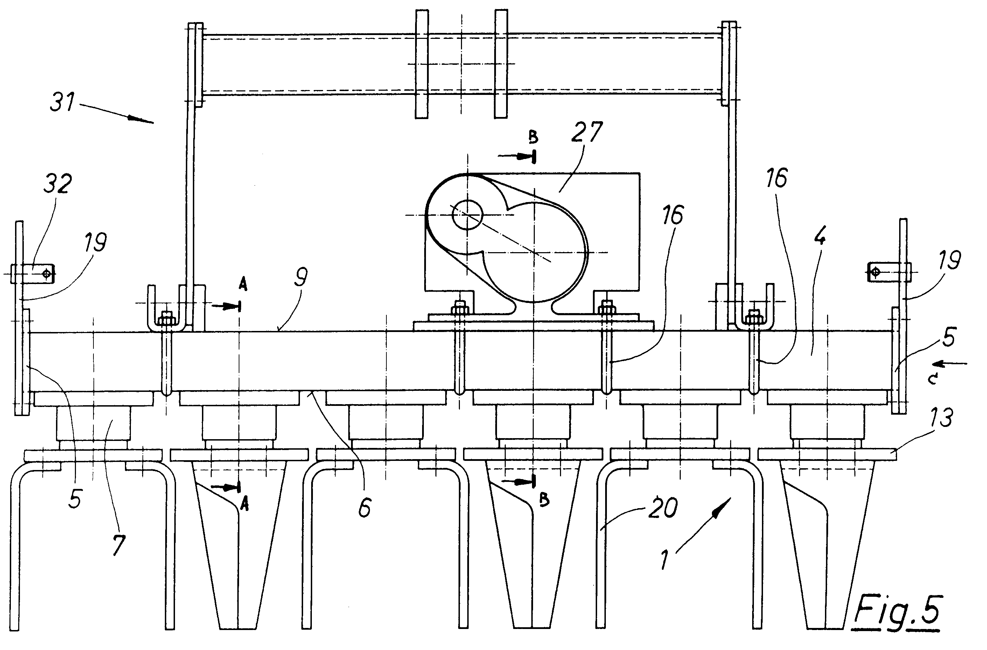

Die Fig. 1 und 4 zeigen jeweils eine Schnittansicht A-A aus Fig. 5 durch einen Kastenbalken. Die Werkzeugkreisel 1 umfassen in üblicher Weise einen Werkzeugträger 13, an welchem Zinken 20 angeschraubt sind. Der Werkzeugträger 13 kann einstückig mit einer Welle 2 verbunden sein, beispielsweise durch Verschweißen, es ist jedoch auch möglich, diesen lösbar, etwa mittels einer planen Kerbverzahnung, formschlüssig mit der Welle 2 zu verbinden. Die Welle 2 weist eine zentrische Ausnehmung auf, durch welche eine Schraube 8, (Spanneinrichtung) durchführbar ist. Die Schraube 8 ist in einen Gewindebereich einer Nabe 15 eines Zahnrades 3 (Stirnrad) eingeschraubt. Erfindungsgemäß ist die Nabe 15 des Zahnrades 3 an ihrer Unterseite, ebenso wie die stirnseitige obere Fläche der Welle 2 mit einer planen Kerbverzahnung 21 versehen. Diese Kerbverzahnung ist beispielsweise als sogenannten Hirth-Verzahnung ausgestaltet. Es ergibt sich somit eine drehfeste Koppelung zwischen dem Zahnrad 3 und der Welle 2, welche durch die Spanneinrichtung 8 aufrechterhalten wird.

Wie in den Fig. 1 und 4 gezeigt, ist die Welle 2 in einem Lagergehäuse 7 gelagert, welches zusätzlich zu den Lagern auch geeignete Dichtungen aufnimmt. Die Lager und die Dichtungen brauchen im einzelnen nicht beschrieben werden, da diese aus dem Stand der Technik bekannt sind.

Das Lagergehäuse 7 weist an seinem oberen Endbereich einen Zentrierbereich 22 auf, welcher in eine Öffnung einer unteren Wandung 6 eines Gehäuses 4 einbringbar ist. Das Gehäuse 4 ist als geschlossenes Hohlprofil mit einem im wesentlichen rechteckigen Querschnitt ausgebildet. Die Befestigung der Lagergehäuse 7 erfolgt mittels Schrauben, welche, wie in Fig. 1 gezeigt, unter zusätzlicher Zwischenschaltung einer Platte 14 verschraubt sind. Die Fig. 1 zeigt Muttern 23, welche mit der Platte 14 verschweißt sind. Diese muß sich nicht einstückig über die gesamte Breite der Kreiselegge erstrecken, sondern kann aus einzelnen aneinander-liegenden Platten bestehen.

Zur Abdichtung zwischen dem Lagergehäuse 7 und dem Hohlprofil 4 ist eine Dichtung 24 vorgesehen. Weiterhin können unter den Köpfen der Schrauben zur Befestigung des Lagergehäuses 7 zusätzliche Dichtungen vorgesehen sein.

Die Fig. 5 zeigt eine Vorderansicht der Bodenbearbeitungsmaschine, aus welcher sich insbesondere ergibt, daß stirnseitige Endplatten 5 vorgesehen sind, um die stirnseitigen Öffnungen des Hohlprofiles 4 zu verschließen. Erfindungsgemäß ist es möglich, entweder nur auf einer Seite oder auf beiden Seiten des Hohlprofiles 4 in den Endplatten 5 eine Zugangsöffnung vorzusehen, die durch Deckel 19 verschlossen werden. Die Zahnräder sind somit entweder von einer Seite oder beidseitig, zusammen mit der Platte 14 einschiebbar.

Wie die Fig. 1 und 4 weiterhin zeigen, ist die Nabe 15 des Zahnrades 3 nach unten verlängert, so daß diese in die jeweilige Ausnehmung der Platte 14 einlegbar ist, um zu verhindern, daß die Zahnräder 3 während des Montagevorganges verrutschen. Nach dem Einschieben der Platte 14 ist es möglich, die Schraube 8 von unten einzuschrauben, dieser Vorgang kann durch eine Bohrung 25 größeren Durchmessers am unteren Bereich der Habe 15 erleichtert werden.

Die Fig. 4 zeigt eine Ausgestaltungsform, bei welcher eine Hülse 26 in eine Bohrung der Habe 15 des Zahnrades 3 eingepreßt ist. Diese Hülse führt zu einer exakten Zentrierung und ist mit dem Innengewinde versehen.

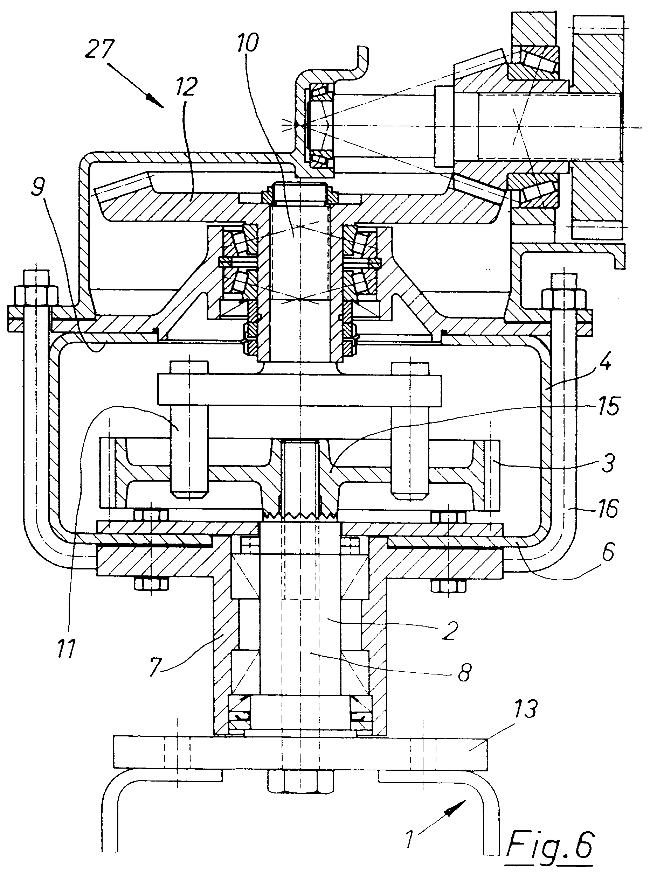

Wie die Fig. 5 zeigt, ist im mittleren Bereich des Hohlprofiles 4 ein Eingangsgetriebe 27 angeordnet, welches in Fig. 6 im einzelnen dargestellt ist. Das Getriebe umfaßt unter anderem eine Antriebswelle 10, auf welcher ein Antriebs-Tellerrad 12 befestigt ist. Im übrigen entspricht das Eingangsgetriebe 27 dem bekannten Stand der Technik, so daß auf eine detaillierte Beschreibung verzichtet werden kann. Am unteren Ende der Antriebswelle 10 sind Mitnehmerelemente 11 gelagert, welche in Ausnehmungen eines der Zahnräder 3 eingreifen, um dieses anzutreiben. Es sind auch andere Verbindungsmöglichkeiten vorstellbar.

Das Eingangsgetriebe 27 ist in eine Öffnung einer oberen Wandung 9 des Hohlprofiles 4 eingesetzt. Die Befestigung kann über Schraubbänder 16 erfolgen, wie in Fig. 6 gezeigt. Es ist jedoch auch möglich, das Eingangsgetriebe 27 direkt mit dem Hohlprofil 4 zu verschrauben. Hierzu sind in den Fig. 2 und 3 gezeigte Verstärkungsteile 28 vorteilhaft, welche vor der Montage des Eingangsgetriebes 27 durch die Öffnung in der oberen Wandung 9 eingeführt und beispielsweise über Muttern 29 mit dem Hohlprofil 4 verschraubt werden. Die Verstärkungsteile 28 weisen Gewindebohrungen 30 auf, welche der Befestigung des Eingangsgetriebes 27 dienen. Es ist somit möglich, dieses zu demontieren, ohne die Verstärkungsteile 28 demontieren zu müssen.

Weiterhin zeigen die Fig. 2 und 3 unterschiedliche Möglichkeiten zur Befestigung eines Anbaubockes 31 (siehe Fig. 5).

Es ist möglich, wie in Fig. 2 gezeigt, eine Rippe 28 umlaufend mit dem Hohlprofil 4 zu verschweißen. Die umlaufende Verschweißung bringt den Vorteil, daß kein Verzug auftritt. Gemäß Fig. 3 ist ein Steg 17 mit dem Hohlprofil 4 verschraubt, beispielsweise unter Zwischenschaltung der Verstärkungsteile 28. Alternativ dazu kann eine Verbindung auch mittels der bereits erwähnten Schraubbänder 16 erfolgen, siehe Fig. 5.

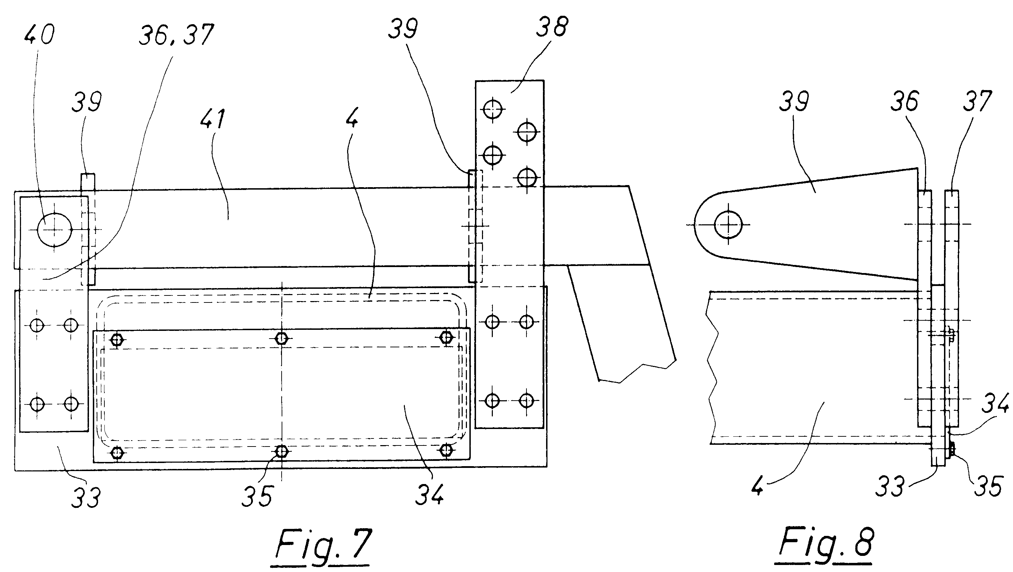

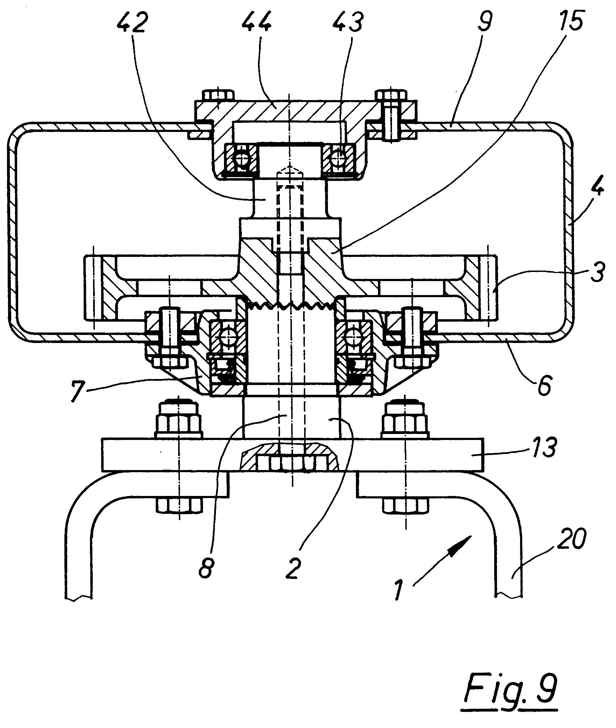

Die Fig. 5 zeigt weiterhin die Möglichkeit, an den seitlichen Deckeln 19 zusätzliche Teile 19 anzubringen, beispielsweise Zapfen 32 zur Lagerung einer nachfolgenden Walze. Alternativ hierzu kann auch, wie in den Fig. 7 und 8 gezeigt, an das Ende des Hohlprofiles 4 eine Platte 33 geschweißt werden, welche, wie durch die gestrichelten Linien dargestellt, eine Öffnung aufweist, welche wiederum über eine Platte 34 verschließbar ist. Die Fig. 8 zeigt, daß die Platte 34 relativ dünn ist und mittels mehrerer Schrauben 35 befestigt ist. Die Platte 33 ist nach vorne und hinten etwas verlängert, so daß vorne aufrechte Stützen 36, 37 angeschraubt werden können. In ähnlicher Weise sind hintere aufrechte Stützen 38 befestigt. Somit können Konsolen 39 an den Stützen 36 und 38 befestigt werden. An den Konsolen 39 können Seitenschilde befestigt werden, welche die Arbeitsbreite der Werkzeuge begrenzen. Weiterhin kann eine Gelenkstelle 40 für Tragarme 41 einer nachlaufenden Walze vorgesehen sein.

Als weitere Alternative zu der in Fig. 5 gezeigten Ausgestaltungsform kann der Deckel 19 auch an einem Flansch befestigt sein, welcher ringförmig das Hohlprofil 4 umgibt und mit diesem verschweißt ist.

Die Fig. 9 zeigt ein drittes Ausführungsbeispiel, bei welchem an der Oberseite des Zahnrades 3 eine Teil-Welle 42 aufgesetzt ist, welche ein oberes Lager 43 trägt, welches wiederum in einem oberen Lagerdeckel 44 gehalten ist. Die Schraube 8 verspannt die Welle 2, das Zahnrad 3 und die Teil-Welle 42. Die Teil-Welle 42 kann formschlüssig mit der Nabe 15 des Zahnrades 3 gekoppelt sein. Vorteilhaft bei dieser Ausgestaltungsform ist, daß der Hebelarm von den Spitzen der Werkzeuge 20 bis zur Unterseite des Gehäuses 4 nicht so groß ist, wie bei dem Ausführungsbeispiel der Fig. 1 und 4. Es ergibt sich somit eine geringere Belastung des Gehäuses 4.

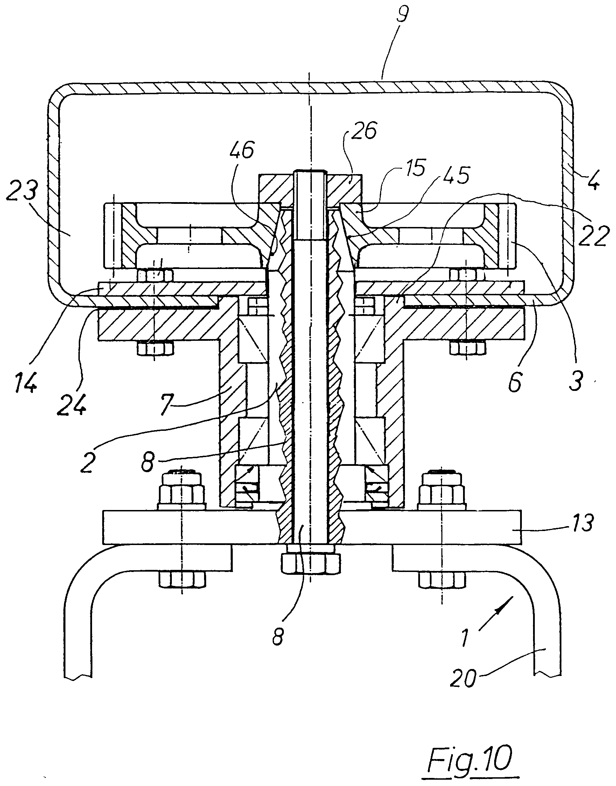

Fig. 10 zeigt ein weiteres Ausführungsbeispiel, bei dem zwischen der Nabe 15 und der Welle 2 eine reibschlüssige Koppelung herstellbar ist. Dazu ist die Nabe 15 mit einem zentrischen Innenkegel 45 versehen, der an einem dazu passenden Außenkegel 46 der Welle 2 anliegt, wenn das Mutternelement 26 mit Hilfe der Schraube 8 angezogen wird und die glatt-kegelige Verbindung 45;46 spannt.

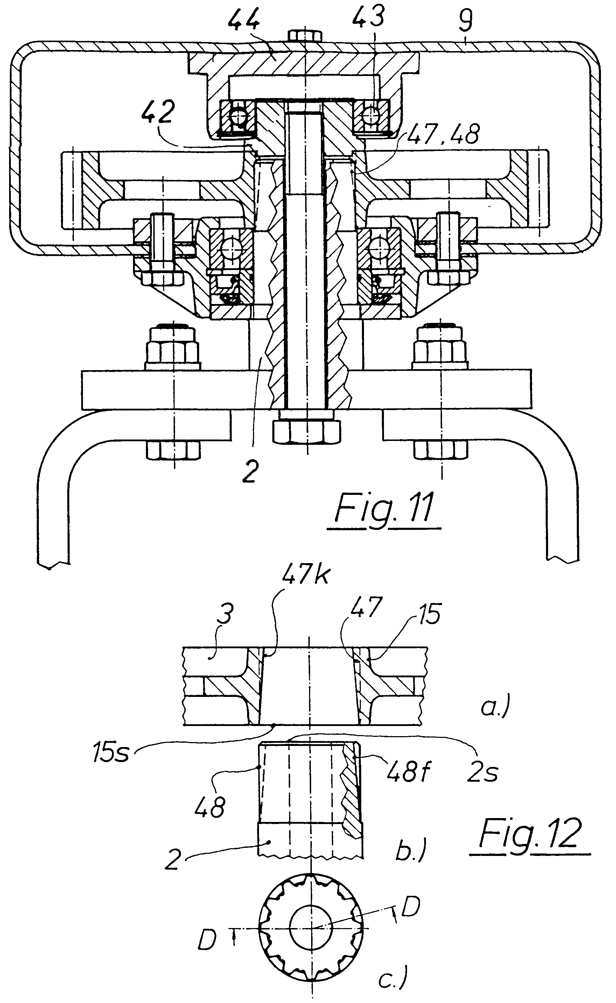

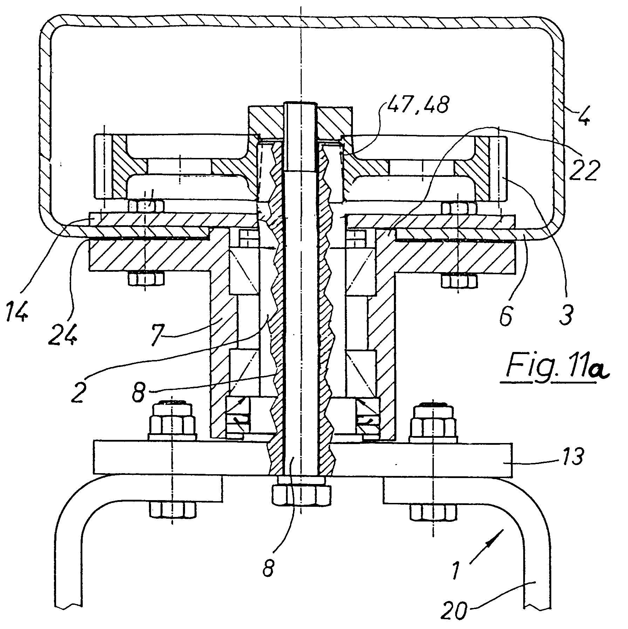

Eine besonders vorteilhafte Gestaltung ist in dem weiteren Ausführungsbeispiel der Fig. 11 und 12 dargestellt. Es entspricht weitgehend dem Ausführungsbeispiel der Fig. 10, nur ist die glatt-kegelige Verbindung 45;46, die das Drehmoment durch reinen Reibschluß überträgt, durch ein formschlüssigkegeliges Keilwellenprofil 47;48 ersetzt, das von einem Keilwellen-Innenprofil 47 der Nabe 15 und einem Keilwellen-Außenprofil 48 der Welle 2 gebildet ist. Das Keilwellenprofil 47;48 ist am besten in Fig. 12 zu erkennen, und zwar in der Draufsicht der Teilfigur c) auf die Stirnseite der Welle 2, die sich von einem normalen Keilwellenprofil nicht unterscheidet. In der Vorderansicht der Teilfigur b) sieht man aber, daß der Fuß 48f des Keilwellen-Außenprofiles 48 das Segment eines Außenkegels bildet, dessen kleiner Durchmesser an der Stirnseite 2s der Welle 2 zu finden ist. In gleicher Weise ist jeder Kopf 47k des Keilwellen-Innenprofiles 47 das Segment eines Innenkegels, der den gleichen Kegel wie der Außenkegel hat, und dessen großer Durchmesser an der auf die Welle 2 gerichteten Stirnseite 15s der Nabe 15 zu finden ist, wie aus der Teilfigur a) der Fig. 12 ohne weiteres zu ersehen ist, die ein geschnittenes Zahnrad 3 korrespondierend zur Teilfigur b) zeigt, wobei der Schnittverlauf D-D in der Teilfigur c) eingetragen ist. Die Figuren 11 und 11a unterscheiden sich im wesentlichen in der Anordnung der Lagerung der Welle 2 und zwar ist bei der Ausführungsform nach Fig. 11 eines der Lager am Gehäusedeckel angeordnet, das für die Montage gleichfalls wie die Zahnräder 3 seitlich in das Hohlprofil 4 eingeschoben wird.

Die Erfindung ist nicht auf die gezeigten Ausführungsbeispiele beschränkt, vielmehr ergeben sich für den Fachmann im Rahmen der Erfindung vielfältige Abwandlungs- und Modifikationsmöglichkeiten.

## Patentansprüche

1. Bodenbearbeitungsmaschine, insbesondere Kreiselegge, mit mehreren Werkzeugkreiseln (1), welche jeweils eine in Arbeitsstellung im wesentlichen vertikal ausgerichtete Welle (2) umfassen, welche mit einem Zahnrad (3) gekoppelt ist, an ihrem unteren Ende mit einem Werkzeugträger (13) verbunden ist und an einem gemeinsamen Gehause (4) gelagert ist, dadurch gekennzeichnet, daß die Welle (2) und das Zahnrad (3) durch eine form- und/oder reibschlüssige, durch axiale, die Welle (2) von unten durchgreifende Spanneinrichtung (8) hergestellte Verbindung gekoppelt sind, wobei die Verspannung die Zentrierung der Welle (2) zu dem Zahnrad (3) bewirkt.

2. Bodenbearbeitungsmaschine nach Anspruch 1, dadurch gekennzeichnet, daß die Verbindung von Welle (2) und Zahnrad (3) aus Verbindungselementen zusammengesetzt ist, die an einem Ende der Welle (2) und einer Nabe (15) des Zahnrades (3) vorgesehen sind.

3. Bodenbearbeitungsmaschine nach Anspruch 2, dadurch gekennzeichnet, daß die Verbindungselemente an den benachbarten, einander zugekehrten und/oder aneinander anliegenden Stirnseiten (2s;15s) der Welle (2) und der Nabe (15) vorgesehen sind.

4. Bodenbearbeitungsmaschine nach Anspruch 1 bis 3, dadurch gekennzeichnet, daß die Verbindungselemente von Welle (2) und Zahnrad (3) in die an die Stirnseiten (2s;15s) anschließenden Mantelbereiche der Welle (2) und der Nabe (15) hineinreichen.

5. Bodenbearbeitungsmaschine nach einem der Ansprüche 1 bis 4, dadurch gekennzeichnet, daß die Verbindung von Welle (2) und Zahnrad (3) formschlüssig in Form einer an den Stirnseiten (2s;15s) vorgesehenen planen Kerbverzahnung (21) ausgebildet ist.

6. Bodenbearbeitungsmaschine nach Anspruch 5, dadurch gekennzeichnet, daß die Kerbverzahnung (21) als Hirth-Verzahnung ausgebildet ist.

7. Bodenbearbeitungsmaschine nach einem der Ansprüche 1 bis 4, dadurch gekennzeichnet, daß unter Verwendung eines reinen Reibschlusses eine spannbare, glatt-kegelige Verbindung (45;46) mit einem Außenkegel (45) an einem Ende der Welle (2) und einem korrespondierenden Innenkegel (46) an der Nabe (15) vorgesehen ist.

8. Bodenbearbeitungsmaschine nach einem der Ansprüche 1 bis 4, dadurch gekennzeichnet, daß als Verbindungselement an einem Ende der Welle (2) ein Keilwellen-Außenprofil (48) und an der Nabe (15) ein komplementäres Keilwellen-Innenprofil (47) vorgesehen sind, wobei der durch den kleinen Durchmesser des Keilwellenprofiles (47;48) bestimmte Fuß (48f) des Keilwellen-Außenprofiles (48) und der komplementäre Kopf (47k) des Keilwellen-Innenprofiles (47) durch Segmente einer jeweiligen Kegelfläche gebildet werden, die nach den Spannen der Verbindung aneinanderliegen.

9. Bodenbearbeitungsmaschine nach einem der Ansprüche 1 bis 8, dadurch gekennzeichnet, daß die Welle (2) und das Zahnrad (3) mittels einer axialen, von der dem Zahnrad abgewandten Seite der Welle betätigbaren Spanneinrichtung (8) verbunden sind.

10. Bodenbearbeitungsmaschine nach Anspruch 9, dadurch gekennzeichnet, daß die Spanneinrichtung (8) in Form einer Schraube ausgebildet ist, welche in ein im Bereich des Zahnrades (3) angeordnetes Gewinde eingeschraubt ist.

11. Bodenbearbeitungsmaschine nach Anspruch 9, dadurch gekennzeichnet, daß die Spanneinrichtung (8) in Form einer Schraube ausgebildet ist, welche mit einem das Zahnrad (3) auf die Welle (2) spannenden Mutternelement (26) verschraubt ist.

12. Bodenbearbeitungsmaschine nach einem der Ansprüche 1 bis 11, dadurch gekennzeichnet, daß die Lagerung der Welle (2) an der unteren (6) und der oberen (9) Wandung des Gehäuses (4) erfolgt.

13. Bodenbearbeitungsmaschine nach einem der Ansprüche 1 bis 12, dadurch gekennzeichnet, daß das Zahnrad (3) über eine Antriebswelle (10) und Mitnehmerelemente (11) mit einem Antriebs-Tellerrad (12) verbunden ist.

14. Bodenbearbeitungsmaschine nach einem der Ansprüche 1 bis 13, dadurch gekennzeichnet, daß das Lagergehäuse (7), vorzugsweise zusammen mit der Welle (2) und dem Werkzeugträger (13) nach unten ausbaubar ist.

15. Bodenbearbeitungsmaschine nach einem der Ansprüche 1 bis 14, dadurch gekennzeichnet, daß in der unteren Wandung (6) des Gehäuses (4) eine Ausnehmung vorgesehen ist, die so bemessen ist, daß die Welle (2) und/oder das Lagergehäuse (7) zentriert ist.

16. Bodenbearbeitungsmaschine nach einem der Ansprüche 1 bis 15, gekennzeichnet durch zumindest ein, bevorzugt durch eine seitliche Öffnung des Gehäuses (4) einbringbares, das Gehäuse (4) versteifende Verstärkungselement (14).

17. Bodenbearbeitungsmaschine nach Anspruch 16, dadurch gekennzeichnet, daß das Verstärkungselement in Form einer Platte (14) ausgebildet ist, gegen welche die Lagergehäuse (7) verschraubt sind.

18. Bodenbearbeitungsmaschine nach Anspruch 17, dadurch gekennzeichnet, daß die Platte (14) mit Ausnehmungen zur Durchführung der Welle (2) versehen ist, in welche zur Montage ein Nabenbereich (15) des Zahnrades (3) einlegbar ist.

19. Bodenbearbeitungsmaschine nach Anspruch 18, dadurch gekennzeichnet, daß die Nabe (15) des Zahnrades (3) mit einem Innengewinde versehen ist.

20. Bodenbearbeitungsmaschine nach einem der Ansprüche 1 bis 18, dadurch gekennzeichnet, daß die Nabe (15) des Zahnrades (3) mit einem Mutternelement (26) verbunden ist.

21. Bodenbearbeitungsmaschine nach einem der Ansprüche 1 bis 18, dadurch gekennzeichnet, daß das Mutternelement (26) in die Nabe (15) eingepreßt ist.

22. Bodenbearbeitungsmaschine nach einem der Ansprüche 1 bis 18, dadurch gekennzeichnet, daß das Mutternelement (26) mit einem Bund koaxial in eine passende Ausnehmung der Welle (2) faßt.

23. Bodenbearbeitungsmaschine nach einem der Ansprüche 1 bis 18, dadurch gekennzeichnet, daß das Mutternelement (26) das Zahnrad (3) gegenüber der Welle (2) zentriert.

24. Bodenbearbeitungsmaschine nach einem der Ansprüche 1 bis 23, dadurch gekennzeichnet, daß das Gehäuse (4) als geschlossenes Hohlprofil ausgebildet und an zumindest einer Stirnseite mittels eines Deckels (5) verschlossen ist.

25. Bodenbearbeitungsmaschine nach dem Anspruch 24, dadurch gekennzeichnet, daß zumindest das untere Lager der Welle (2) im Bereich einer Ausnehmung an der unteren Wandung (6) des Hohlprofiles (4) mittels eines Lagergehäuses (7) angeordnet ist.

## Claims

1. A soil cultivating machine, in particular a rotary harrow, comprising a plurality of rotary tools (1) each having a shaft (2) arranged substantially vertically in the operating position, the shaft (2) being coupled to a gearwheel (3), connected to a tool holder (13) at its lower end and mounted on a common housing (4), characterised in that the shaft (2) and the gearwheel (3) are coupled by means of a positive and/or frictional connection produced by an axial clamping device (8) extending through the shaft (2) from below, the shaft (2) being centered relative to the gearwheel (3) as a result of the clamping action.

2. A soil cultivating machine according to claim 1, characterised in that the connection between the shaft (2) and the gearwheel (3) is produced by connecting members provided on one end of the shaft (2) and on a hub (15) of the gearwheel (3).

3. A soil cultivating machine according to claim 2, characterised in that the connecting members are provided on the adjacent facing and/or abutting end surfaces (2s; 15s) of the shaft (2) and the hub (15).

4. A soil cultivating machine according to claims 1 to 3, characterised in that the connecting members of the shaft (2) and the gearwheel (3) extend into the lateral surface regions - adjacent the end surfaces (2s; 15s) - of the shaft (2) and the hub (15).

5. A soil cultivating machine according to any one of claims 1 to 4, characterised in that the connection between the shaft (2) and the gearwheel (3) is formed positively as a planar serration (21) provided on the end surfaces (2s; 15s).

6. A soil cultivating machine according to claim 5, characterised in that the serration (21) is formed as a Hirth-type serration.

7. A soil cultivating machine according to any one of claims 1 to 4, characterised in that, when using a purely frictional connection, a clampable, smooth-coned connection (45; 46) is provided, comprising an outer cone (45) on one end of the shaft (2) and a corresponding inner cone (46) on the hub (15).

8. A soil cultivating machine according to any one of claims 1 to 4, characterised in that, as a connecting member, an outer spine profile (48) is provided on one end of the shaft (2) and a complementary inner spline profile (47) is provided on the hub (15), the base (48f) of the outer spline profile (48) and the complementary head (47k) of the inner spline profile (47) being formed by segments of a respective conical surface which rest against one another after the connection has been clamped, the base (48f) being defined by the small diameter of the spline profile (47; 48).

9. A soil cultivating machine according to any one of claims 1 to 8, characterised in that the shaft (2) and the gearwheel (3) are connected by means of an axial clamping device (8) operable from the end of the shaft remote from the gearwheel.

10. A soil cultivating machine according to claim 9, characterised in that the clamping device (8) is in the form of a bolt screwed into a thread arranged in the region of the gearwheel (3).

11. A soil cultivating machine according to claim 9, characterised in that the clamping device (8) is in the form of a bolt secured by a nut (26) clamping the gearwheel (3) to the shaft (2).

12. A soil cultivating machine according to any one of claims 1 to 11, characterised in that the shaft (2) is mounted on the lower (6) and upper (9) walls of the housing (4).

13. A soil cultivating machine according to any one of claims 1 to 12, characterised in that the gearwheel (3) is connected to a driving crown wheel (12) via a drive shaft (10) and driving members (11).

14. A soil cultivating machine according to any one of claims 1 to 13, characterised in that the bearing housing (7) is downwardly removable, preferably together with the shaft (2) and the tool holder (13).

15. A soil cultivating machine according to any one of claims 1 to 14, characterised in that an opening is provided in the lower wall (6) of the housing (4) and is dimensioned in such a manner that the shaft (2) and/or the bearing housing (7) is centered.

16. A soil cultivating machine according to any one of claims 1 to 15, characterised by at least one reinforcing member (14) strengthening the housing (4) and preferably insertable through a lateral opening in the housing (4).

17. A soil cultivating machine according to claim 16, characterised in that the reinforcing member is in the form of a plate (14), to which the bearing housings (7) are bolted.

18. A soil cultivating machine according to claim 17, characterised in that the plate (14) is provided with openings for the passage of the shaft (2), into which a hub region (15) of the gearwheel (3) is insertable for assembly purposes.

19. A soil cultivating machine according to claim 18, characterised in that the hub (15) of the gearwheel (3) is provided with an internal thread.

20. A soil cultivating machine according to any one of claims 1 to 18, characterised in that the hub (15) of the gearwheel (3) is connected to a nut (26).

21. A soil cultivating machine according to any one of claims 1 to 18, characterised in that the nut (26) is pressed into the hub (15).

22. A soil cultivating machine according to any one of claims 1 to 18, characterised in that the nut (26) is held co-axially in a corresponding opening in the shaft (2) by means of a collar.

23. A soil cultivating machine according to any one of claims 1 to 18, characterised in that the nut (26) centres the gearwheel (3) relative to the shaft (2).

24. A soil cultivating machine according to any one of claims 1 to 23, characterised in that the housing (4) is formed as a closed, hollow section and is closed by means of a cover (5) at at least one end.

25. A soil cultivating machine according to claim 24, characterised in that at least the lower bearing of the shaft (2) is arranged in the region of an opening in the lower wall (6) of the hollow section (4) by means of a bearing housing (7).

## Revendications

1. Machine de préparation du sol, en particulier herse rotative, comportant plusieurs outils rotatifs (1) comprenant chacun un arbre (2), qui, en position de travail, est essentiellement dirigé verticalement, qui est couplé à une roue dentée (3) et qui, à son extrémité inférieure, est relié à un porte-outil (13) et monté à rotation sur un carter (4) commun,
caractérisée en ce que l'arbre (2) et la roue dentée (3) sont accouplés au moyen d'une liaison par conjugaison de formes et/ou par friction, réalisée par un dispositif de serrage (8) axial, traversant l'arbre (2) depuis le bas, le serrage assurant le centrage de l'arbre (2) sur la roue dentée (3).

2. Machine de préparation du sol suivant la revendication 1, caractérisée en ce que la liaison de l'arbre (2) et de la roue dentée (3) résulte de l'assemblage d'éléments de liaison qui sont prévus à une extrémité de l'arbre (2) et sur un moyeu (15) de la roue dentée (3).

3. Machine de préparation du sol suivant la revendication 2, caractérisée en ce que les éléments de liaison sont prévus sur les faces en bout (2s; 15s) voisines, tournées l'une vers l'autre ou placées l'une contre l'autre, de l'arbre (2) et du moyeu (15).

4. Machine de préparation du sol suivant l'une des revendications 1 à 3, caractérisée en ce que les éléments de liaison de l'arbre (2) et de la roue dentée (3) pénètrent jusque dans les zones externes de l'arbre (2) et du moyeu (15), se raccordant aux faces en bout (2s; 15s).

5. Machine de préparation du sol suivant l'une des revendications 1 à 4, caractérisée en ce que la liaison de l'arbre (2) et de la roue dentée (3) est réalisée par conjugaison de formes, sous la forme d'une denture plane à cannelures (21), prévue sur les faces en bout (2s; 15s).

6. Machine de préparation du sol suivant la revendication 5, caractérisée en ce que la denture à cannelures (21) est réalisée sous la forme d'un crantage Hirth.

7. Machine de préparation du sol suivant l'une des revendications 1 à 4, caractérisée en ce qu'en utilisant un entraînement à friction pure, il est prévu une liaison (45; 46) en forme de cône lisse, pouvant être mise en serrage, comportant un cône extérieur (45) à une extrémité de l'arbre (2), et un cône intérieur (46) correspondant sur le moyeu (15).

8. Machine de préparation du sol suivant l'une des revendications 1 à 4, caractérisée en ce que, comme éléments de liaison, sont prévus, à une extrémité de l'arbre (2), un profil extérieur en arbre cannelé (48), et, sur le moyeu (15), un profil intérieur d'arbre cannelé (47) complémentaire, le pied (48f) de l'arbre cannelé (48), déterminé par le petit diamètre du profil cannelé (47; 48), et la tête complémentaire (47k) du profit intérieur d'arbre cannelé (47) étant chacun formés par des segments d'une surface conique en correspondance, ces segments étant en contact après mise en serrage de la liaison.

9. Machine de préparation du sol suivant l'une des revendications 1 à 8, caractérisée en ce que l'arbre (2) et la roue dentée (3) sont reliés au moyen d'un dispositif de serrage (8) axial, pouvant être actionné depuis le côté de l'arbre (2), opposé à la roue dentée (3).

10. Machine de préparation du sol suivant la revendication 9, caractérisée en ce que le dispositif de serrage (8) est réalisé sous la forme d'une vis, qui est vissée dans un filetage disposé dans la zone de la roue dentée (3).

11. Machine de préparation du sol suivant la revendication 9, caractérisée en ce que le dispositif de serrage (8) est réalisé sous la forme d'une vis, qui est vissée avec un élément formant écrou (26), mettant la roue dentée (3) en serrage sur l'arbre (2).

12. Machine de préparation du sol suivant l'une des revendications 1 à 11, caractérisée en ce que le montage des paliers de l'arbre (2) est réalisée sur la paroi inférieure (6) et sur la paroi supérieure (9) du carter (4).

13. Machine de préparation du sol suivant l'une des revendications 1 à 12, caractérisée en ce que la roue dentée (3) est reliée à une couronne de différentiel (12) d'entraînement, par l'intermédiaire d'un arbre d'entraînement (10) et d'organes d'entraînement (11).

14. Machine de préparation du sol suivant l'une des revendications 1 à 13, caractérisée en ce que le carter de palier (7) peut être démonté vers le bas, de préférence en même temps que l'arbre (2) et que te porte-outil (13).

15. Machine de préparation du sol suivant l'une des revendications 1 à 14, caractérisée en ce que, dans la paroi inférieure (6) du carter (4), il est prévu un évidement, qui est dimensionné de façon à centrer l'arbre (2) et/ou le carter de palier (7).

16. Machine de préparation du sol suivant l'une des revendications 1 à 15, caractérisée par au moins un organe de renfort (14) rigidifiant le carter (4) et pouvant, de préférence, être mis en place par une ouverture latérale du carter (4).

17. Machine de préparation du sol suivant la revendication 16, caractérisée en ce que l'organe de renfort est réalisé sous la forme d'une plaque (14) contre laquelle sont vissés les carters de palier (7).

18. Machine de préparation du sol suivant la revendication 17, caractérisée en ce que la plaque (14) est munie, pour le passage de l'arbre (2), d'évidements dans lesquels peut être introduite, pour le montage, une zone du moyeu (15) de la roue dentée (3).

19. Machine de préparation du sol suivant la revendication 18, caractérisée en ce que le moyeu (15) de la roue dentée (3) est muni d'un filetage intérieur.

20. Machine de préparation du sol suivant l'une des revendications 1 à 18, caractérisée en ce que le moyeu (15) de la roue dentée (3) est relié à un élément formant écrou (26).

21. Machine de préparation du sol suivant l'une des revendications 1 à 18, caractérisée en ce que l'élément formant écrou (26) est inséré par pressage dans le moyeu (15).

22. Machine de préparation du sol suivant l'une des revendications 1 à 18, caractérisée en ce que l'élément formant écrou (26) fait prise coaxialement avec une collerette dans un évidement correspondant de l'arbre (2).

23. Machine de préparation du sol suivant l'une des revendications 1 à 18, caractérisée en ce que l'élément formant écrou (26) centre la roue dentée (3) par rapport à l'arbre (2).

24. Machine de préparation du sol suivant l'une des revendications 1 à 23, caractérisée en ce que le carter (4) est réalisé sous la forme d'un profilé creux fermé et est fermé, sur au moins une face d'extrémité, au moyen d'un couvercle (5).

25. Machine de préparation du sol suivant la revendication 24, caractérisée en ce qu'au moins le palier inférieur de l'arbre (2) est disposé dans la zone d'un évidement, sur la paroi inférieure du profilé creux (4), au moyen d'un carter de palier (7).
